# FASCICULE DE BREVET EUROPEEN

(11) **EP 3 471 981 B1**
(45) Date de publication et mention de la délivrance du brevet: **11.08.2021**
(21) Numéro de dépôt: 17743067.5
(22) Date de dépôt: 19.06.2017
(51) Int. Cl.: B60J 5/04, B60J 5/10

(54) **OUVRANT EN MATIÈRE PLASTIQUE CONSERVANT SA FONCTION D'OBTURATION DE L'OUVERTURE DE LA CAISSE EN CAS DE CHOC**
ÖFFNUNGSPLATTE AUS KUNSTSTOFF MIT HINDERUNG DER ÖFFNUNG IN DER KAROSSERIE IM FALLE EINES AUFPRALLS
OPENING PANEL MADE FROM PLASTIC, WHICH CONTINUES TO BLOCK THE OPENING IN THE BODY SHELL IN THE EVENT OF AN IMPACT

(30) Priorité: 20.06.2016 US 201662352317 P
(43) Date de publication de la demande: 24.04.2019
(73) Titulaire: Compagnie Plastic Omnium, 69007 Lyon (FR)
(72) Inventeur: COUDRON, Philippe, 69300 Caluire et Cuire (FR)
(74) Mandataire: LLR
(86) Numéro de dépôt international: PCT/FR2017/051596
(87) Numéro de publication internationale: WO 2017/220903

(56) Documents cités:
- WO-A1-2010/071214
- WO-A1-2011/063538
- WO-A1-2015/033076
- FR-A1- 2 876 621
- FR-A1- 3 002 759

## Description

L'invention concerne le domaine de l'industrie automobile. Plus particulièrement, l'invention concerne un sous-ensemble de véhicule automobile en matière plastique, tel qu'un hayon, adapté aux exigences de sécurité lors d'un accident affectant l'ouvrant.

Un hayon de véhicule automobile comprend un corps d'ouvrant, formant un élément permettant d'obturer au moins partiellement une ouverture de la caisse. Le corps est déplaçable entre une position d'obturation de l'ouverture et une position de passage dans lequel on laisse libre l'accès à l'ouverture.

On connaît notamment les ouvrants arrières de véhicule, tels que les hayons, qui se compose de deux pièces principales : un caisson intérieur et une peau extérieure. Ces pièces constituent un panneau monobloc ou bi bloc, et intègre en totalité ou en partie certains des équipements extérieurs visibles ou non depuis l'extérieur du véhicule (bloc optique, commande d'ouverture du hayon ou de la lunette, emblème, système de lavage-essuyage, serrure, butées, plaque d'immatriculation...).

La très grande majorité des hayons de l'état de la technique sont réalisés en acier. Mais l'on connaît également des hayons réalisés en matière plastique, thermoplastique et/ou thermodurcissable, de façon à alléger le hayon, mais en offrant des performances mécaniques différentes.

La matière thermodurcissable présente une meilleure tenue à la déformation que la matière thermoplastique, mais présente l'inconvénient d'être plus dense. La matière thermoplastique habituellement utilisée, présente une faible limite élastique (début de déformation plastique à basse contrainte) et donc une résistance à la rupture relativement basse et peut être sujette à une fatigue mécanique au cours de son utilisation.

Le document WO 2011/063538 A1 décrit un ouvrant de l'état de l'art.

Or, comme tous les ouvrants d'un véhicule, les ouvrants réalisés en matériau thermoplastique sont soumis à des normes.

Pour satisfaire aux exigences générales des cahiers des charges, il est en particulier nécessaire de renforcer les zones d'attache de l'ouvrant sur le véhicule (charnières, serrure, vérins ...) afin que l'ouvrant ne se désolidarise pas du véhicule lors d'un accident.

Pour satisfaire à d'autres exigences, il est également nécessaire qu'en cas de choc dit à grande vitesse (>20km/h) subi par le véhicule, l'ouvrant, même cassé, reste en une seule entité, afin de ne pas répandre de nombreux débris, et de continuer à exercer une certaine sollicitation supplémentaire. En d'autres termes, l'ouvrant ne doit pas se démanteler, se disloquer au point de présenter des morceaux complètement détachés de l'ensemble initial ou ni reliés entre eux.

Pour cela, les pièces formant l'ouvrant doivent admettre de grandes déformations sans rompre. Cependant, les pièces formant l'ouvrant doivent en même temps être suffisamment rigides pour assurer la bonne tenue géométrique de l'ouvrant lors d'une utilisation classique. C'est pourquoi, lorsque qu'on utilise des matériaux plastiques pour la réalisation d'un ouvrant, le dimensionnement conduit à utiliser des matériaux plastiques rigides, au moins pour le caisson intérieur (structure interne). Mais ces derniers s'avèrent peu extensibles en cas de choc à haute vitesse.

Pour assurer cette propriété d'extensibilité, il est connu d'ajouter à l'ouvrant, une pièce complémentaire, autre que le caisson intérieur et la peau extérieure, qui peut être faite d'acier ou plus généralement dans le cas d'ouvrant en plastique, d'un textile à base de fibres de verre, de carbone ou d'aramide. Cette pièce complémentaire, judicieusement positionné sur des zones sensibles du hayon, permet de conserver une liaison entre les éléments brisés lors du choc.

Si la pièce complémentaire est faite d'acier, le coût et la masse peuvent vite être en inéquation avec l'intérêt de l'utilisation de matière plastique pour fabriquer un ouvrant allégé.

Dans le cas de l'utilisation de renfort tissé (textile), le lien entre les morceaux brisés peut être assuré.

Pour maintenir reliés entre eux les éléments cassés lors d'un choc, on connaît également l'utilisation de câbles, ou de tresse de fibres de renfort rapportées ou surmoulée sur la doublure de l'ouvrant. Une telle pièce complémentaire (tresse, câble) est généralement montée avec du jeu sur la doublure et non « serrée/ajustée/tendue". De ce fait, lorsque des bouts de l'ouvrant sont cassés, ils sont juste reliés entre eux pour ne pas tomber sur la route mais "à distance" (5 à 10 cm) les uns des autres du fait du jeu laissé par la pièce complémentaire. Ces morceaux sont donc "quasi libres" du fait de la souplesse de la pièce complémentaire.

Cependant, pour satisfaire à d'autres exigences de normes, ou de constructeurs automobiles, il est également nécessaire qu'en cas de choc à grande vitesse (>20km/h) subi par l'ouvrant, l'ouvrant, même cassé, conserve sa fonction d'obturation au moins partiellement de l'ouverture de la caisse, afin d'éviter une éjection hors de l'habitacle d'un passager ou d'un objet se trouvant à l'intérieur du véhicule.

Pour cela, il faut que l'ensemble constitué des morceaux brisés et liés conserve une rigidité suffisante, c'est-à-dire que cet ensemble disloqué de bouts reliés entre eux doit conserver la possibilité de constituer un obstacle physique assez robuste pour continuer à obstruer l'ouverture.

Or, avec l'utilisation d'un textile, d'une tresse ou d'un câble, l'ensemble des morceaux brisés et reliés ne constitue pas un ensemble suffisamment rigide pour obturer l'ouverture de la caisse d'une manière à éviter une éjection d'un passager ou d'un objet se trouvant à l'intérieur du véhicule car ces matériaux de liaison ont un module d'Young extrêmement faible.

Ainsi, il n'existe actuellement pas d'ouvrant en matière plastique respectant conjointement les exigences suivantes, lors d'un choc à grande vitesse :
- l'ouvrant ne se désolidarise pas du véhicule ;
- les éléments de l'ouvrant disloqués, restent reliés entre eux en une seule entité ;
- l'ouvrant conserve, au moins partiellement, sa fonction d'obturation de l'ouverture de la caisse.

L'invention a pour but de remédier à ces inconvénients en fournissant un sous-ensemble de véhicule automobile comprenant une première pièce formant une peau externe de carrosserie, et une seconde pièce formant une structure interne (doublure) sur laquelle ladite peau est fixée. La seconde pièce formant une structure interne comprend au moins un renfort mécanique en matériau thermoplastique ayant un module d'Young inférieur à celui de la matière plastique de la structure interne, et un coefficient d'allongement à la rupture supérieur à celui de la matière plastique de la structure interne.

Un tel sous-ensemble de véhicule automobile permet de conserver une bonne intégrité de la pièce de structure interne après un choc, tout en conservant un bilan masse satisfaisant et un bilan économique pertinent.

Le sous-ensemble peut en outre comporter l'une ou plusieurs des caractéristiques suivantes, prises seules ou en combinaison :
- la première pièce est en matière thermoplastique, et la seconde pièce est en matière plastique thermodurcissable ;
- le renfort mécanique a les propriétés suivantes :
   - un module d'Young compris entre 500MPa et 3000MPa, de préférence entre 800MPa et 2000MPa ;
   - un coefficient d'allongement à la rupture supérieur à 20%, de préférence entre 20 et 80%, et encore de préférence supérieur à 80% ;
- le renfort mécanique est en polypropylène (PP), ou en polyéthylène (PE) ;
- le renfort mécanique est disposé dans au moins une zone de rupture identifiée en cas de choc sur le sous-ensemble ;
- le sous-ensemble comporte un seul renfort mécanique couvrant l'ensemble des zones de rupture identifiée en cas de choc sur le sous-ensemble ;
- le sous-ensemble forme un hayon et le renfort mécanique comporte un élément formant une boucle, ledit élément étant fixé à la zone serrure, de façon à ce que la serrure vienne se positionner dans la boucle lorsque le hayon est fermé ;
- les zones de rupture sont toute zone où l'on constate une cassure lors d'un essai réel ou simulé de choc à grande vitesse impactant la seconde pièce ;
- le sous-ensemble forme un hayon et les zones de rupture sont sélectionnées parmi les zones suivantes :
   - les deux coins inférieurs latéraux du hayon ;
   - la zone de connexion du montant du hayon avec la base du hayon ;
- les deux zones perpendiculaires à la base de la structure interne, et encadrant la zone serrure ;
- le renfort mécanique est fixé à la seconde pièce au moyen d'au moins une des techniques suivantes: collage, soudage (ultrason, laser, miroir...), bouterollage, surmoulage, vissage, rivetage, clipage, adhésivage ;
- la première pièce est en matière thermoplastique comportant du polypropylène et 30% en masse de talc ;
- la seconde pièce est en matière thermoplastique comportant du polypropylène et 40% en masse de fibres de verre longues ;
- la seconde pièce est en matière plastique thermodurcissable de type SMC comportant 30% en masse de fibres de renfort longue ;
- le renfort mécanique comporte au moins deux sous-parties ;
- chaque sous-partie comporte un élément formant une boucle, ledit élément étant fixé à la zone serrure, de façon à ce que la serrure vienne se positionner dans la boucle lorsque le hayon est fermé ;
- le renfort mécanique a une forme globalement en double « U» ;
- chaque zone en « U » du renfort mécanique est complétée par une forme globalement en « Y» horizontal.

L'invention sera mieux comprise à la lecture des figures annexées, qui sont fournies à titre d'exemples et ne présentent aucun caractère limitatif, dans lesquelles :
La figure 1 illustre un hayon de véhicule automobile comprenant une première pièce formant une peau externe de carrosserie, et une seconde pièce formant une structure interne sur laquelle la peau est fixée.
La figure 2 illustre une seconde pièce formant une structure interne comprenant des renforts mécaniques dans des zones de rupture possibles.
La figure 3 illustre un détail de la figure 2, après un choc à grande vitesse ; cette figure illustre localement le comportement du renfort mécanique pour maintenir reliés de part et d'autre d'une ligne de rupture les deux morceaux disloqués d'une seconde pièce tout en conservant une rigidité apte à obturer l'ouverture de la caisse.
La figure 4 illustre un renfort mécanique non monobloc, comportant deux sous-parties, une première sous-partie localisée sur la partie droite du véhicule, et une seconde sous-partie localisée sur la partie gauche du véhicule.
La figure 5 illustre un renfort mécanique dont chaque zone en « U » est complétée par une forme globalement en « Y» horizontal.

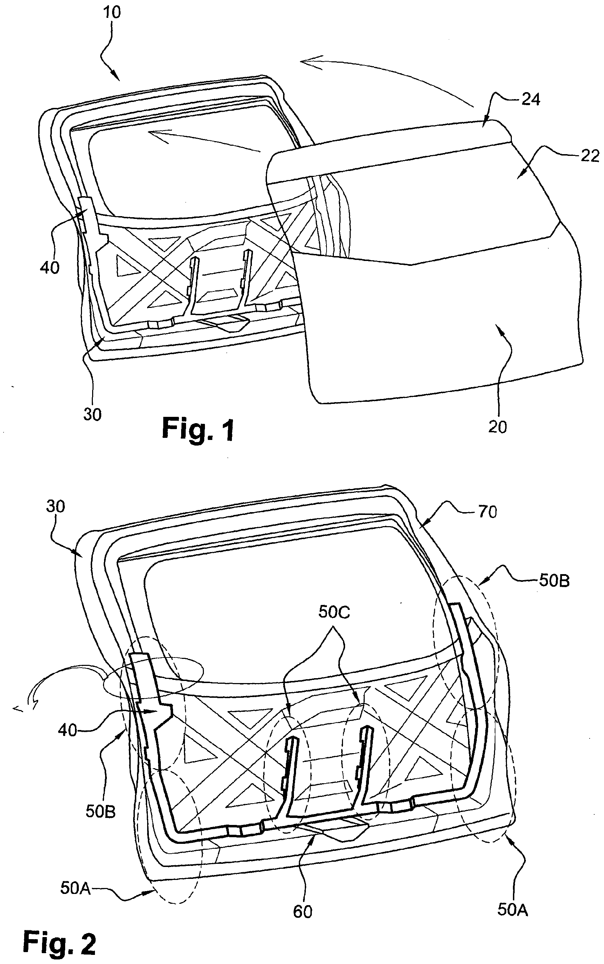

On se réfère maintenant à la figure 1, qui illustre un sous-ensemble (10) de véhicule automobile comprenant une première pièce formant une peau externe (20) de carrosserie, portant par exemple une lunette 22 et un becquet 24, et une seconde pièce formant une structure interne (30) (doublure) sur laquelle ladite peau (20) est fixée.

La peau externe (20) et la structure interne (30) sont en matière plastique. Selon un mode de réalisation préféré, la peau externe (20) est en matière thermoplastique, et la structure interne (30) est en matière plastique thermodurcissable.

La seconde pièce formant une structure interne (30) comprend au moins un renfort mécanique (40) en matériau thermoplastique ayant un module d'Young inférieur à celui de la matière plastique de la structure interne (30), et un coefficient d'allongement à la rupture supérieur à celui de la matière plastique de la structure interne (30).

De préférence, le renfort mécanique (40) possède une faible densité, inférieure à celle de la matière plastique de la structure interne (30). Le renfort mécanique (40) a ainsi de préférence une densité inférieure à 1,0kg/l.

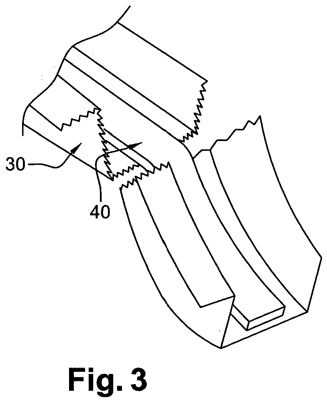

Comme l'illustre la figure 3, un tel renfort mécanique (40) permet de conserver la rigidité souhaité pour la structure interne (30) lors d'une utilisation habituelle, tout en permettant de grandes déformations sans rompre en cas de choc à grande vitesse (>20km/h), et de relier entre eux les éléments cassés de la structure interne (30).

Enfin, un tel renfort mécanique (40) permet un effet de paroi fermant l'ouverture arrière et empêcher des objets et/ou des passagers d'être éjectées du véhicule en cas de choc à grande vitesse.

En effet, lors d'un choc à grande vitesse, la structure interne (30) va se rompre par endroits. Ensuite le renfort mécanique (40) va se plier de part et d'autre de la zone de rupture de la doublure, mais sans rompre du fait de son fort coefficient d'allongement, permettant alors de conserver un lien continu entre les parties brisées et surtout conserver une rigidité de la structure interne (30), formée alors des parties brisées liées entre elles, suffisante pour éviter l'éjection de passager. La rigidité suffisante correspond à une exigence, pour une zone donnée, de surface donnée, de présenter un déplacement inférieur à une valeur seuil sous un effort donné. Ces valeurs sont généralement fournies par le constructeur automobile.

On décrit par la suite un exemple de réalisation, dans lequel le sous-ensemble (10) est un ouvrant (10) de véhicule automobile, et plus précisément un ouvrant de type un hayon, tel qu'illustré sur la figure 1.

### Nature du renfort mécanique (40)

On peut utiliser un renfort dans un matériau thermoplastique ayant les propriétés suivantes :
- un module d'Young compris entre 500MPa et 3000MPa, de préférence entre 800MPa et 2000MPa ;
- un très fort coefficient d'allongement à la rupture, c'est-à-dire supérieur à 20%, de préférence entre 20 et 80%, et encore de préférence supérieur à 80%.

On appelle « coefficient d'allongement à la rupture » le rapport entre la longueur d'une éprouvette normalisée avant la rupture lorsqu'elle est soumise à une traction au moyen d'une machine de traction exerçant un effort longitudinal aux extrémités de l'éprouvette, sur la longueur de l'éprouvette normalisée avant toute traction. Le coefficient d'allongement à la rupture est exprimé en pourcentage.

On peut par exemple utiliser seul ou en combinaison au moins l'un des matériaux suivants :
- matériau en polypropylène (PP) ;
- matériau en polyéthylène (PE).

### Dimension du renfort mécanique (40)

Le renfort mécanique (40) peut avoir une géométrie quelconque.

Cependant on peut définir sa forme, ses dimensions dont l'épaisseur, afin d'accentuer, d'améliorer sa souplesse et/ou sa raideur et/ou sa masse.

Selon un exemple de réalisation (voir figure 2), pour un hayon de véhicule automobile, les renforts (40) utilisés ont la géométrie suivante :
- section en U de 30mm (base du U) x15mm (bord du U) ;
- épaisseur de 3mm ;

Mais bien évidemment l'homme du métier saura adapter la section (en I par exemple), les dimensions, l'épaisseur et le poids en fonction des besoins observés lors d'essais réels ou simulés de chocs à grande vitesse.

### Position du renfort mécanique (40)

L'ouvrant (10) peut comporter plusieurs renforts mécaniques (40) liés à la structure interne (30). Chaque renfort (40) est disposé dans au moins une zone (50) de rupture identifiée en cas de choc sur l'ouvrant (10). Une telle zone peut être identifiée par l'homme du métier lors d'essais réels ou simulés de chocs à grande vitesse.

Le hayon étant maintenu à la caisse, même lors d'un choc, par trois points dimensionnés en conséquence (la zone de la serrure et les deux zones charnières), les zones (50A) de rupture sont notamment les deux coins inférieurs latéraux du hayon (voir figure 2), qui sont les zones de plus faibles résistance mécanique.

En effet, ces zones (50A) sont loin des trois points d'ancrage et peuvent donc "bailler" si le hayon casse au niveau du bas du montant (coin inférieur de la lunette).

Comme l'illustre la figure 2, les zones (50) de rupture peuvent également être :
- la zone de connexion (50B) du montant latéral (70) avec la base du hayon (partie de la structure en regard avec le coin inférieur de la lunette) ;
- les deux zones perpendiculaires à la base de la structure interne (50C), et encadrant la zone serrure ;
- et de façon générale, toute zone où l'on constate une cassure lors d'un essai réel ou simulé de choc à grande vitesse impactant la structure interne (30).

Selon, un mode de réalisation particulier, illustré par la figure 2, on utilise un seul renfort mécanique (40) monobloc pour couvrir et rejoindre de façon continue les différentes zones (50). Le renfort peut alors avoir la forme d'une bande.

De façon plus générale, la section du renfort peut être variable en fonction du dimensionnement mécanique, du profil tridimensionnel à suivre de la structure interne (30), de la place disponible, des contraintes de masse et des modes de fixation. Ainsi, le renfort peut avoir des sections en U, I, H, L, W...

Selon un exemple particulier de ce mode de réalisation, le renfort mécanique (40) continu, couvrant l'ensemble des zones (50), comporte un élément formant une boucle (60). Cet élément (60) est fixé à la zone serrure, de façon à ce que la serrure vienne se positionner dans la boucle (60) lorsque le hayon est fermé. Ainsi, lors d'un choc à grande vitesse, la zone serrure étant dimensionnée et renforcée (par un insert en acier par exemple) pour ne pas céder, l'ensemble du renfort (40) est maintenu fixe au niveau de la boucle. La boucle (60) forme ainsi, avec la serrure, un point d'ancrage pour le renfort (40) monobloc.

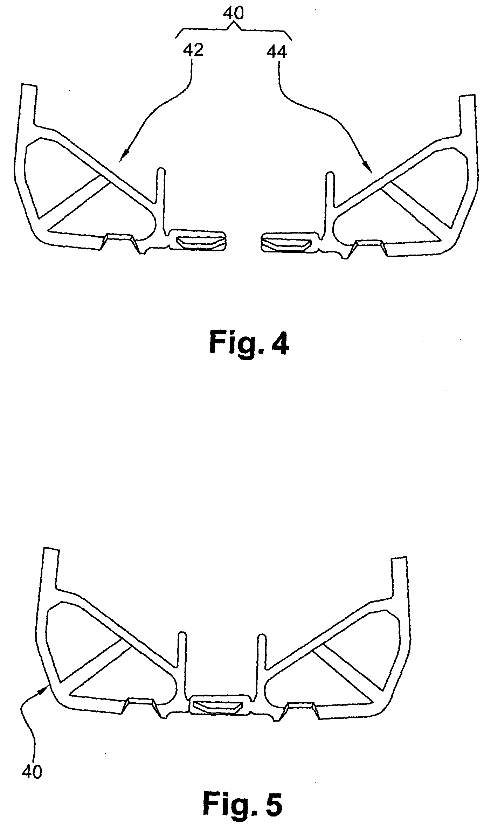

Selon un autre mode de réalisation (figure 4), le renfort mécanique (40) n'est pas monobloc, et il comporte au moins deux sous-parties (42, 44). Les sous-parties sont deux entités séparées, qui peuvent éventuellement être mises en contact au moment de l'assemblage sur le hayon. Elles ne sont donc a priori pas issues d'une même opération de moulage, pas issues d'une même empreinte de moule. Chaque sous-partie est donc généralement fabriquée indépendamment l'une de l'autre. Par exemple, le renfort mécanique (40) comporte une première sous-partie (44) localisée sur la partie droite du véhicule, et une seconde sous-partie (42) localisée sur la partie gauche du véhicule.

Dans cette configuration, et selon un premier exemple de réalisation, chaque sous-partie (42, 44) comporte un élément formant une boucle (60). Chaque élément (60) est fixé à la zone serrure, de façon à ce que la serrure vienne se positionner dans les boucles (60) lorsque le hayon est fermé. Les boucles (60) forment ainsi, avec la serrure, un point d'ancrage pour les sous-parties du renfort (40).

Dans cette configuration, et selon un second exemple de réalisation, chaque sous-partie (42, 44) comporte un élément formant une boucle (60), mais chaque élément (60) est fixé à un point d'ancrage, distinct pour chaque sous-partie ou commun. De préférence, ce ou ces points d'ancrage sont situés à proximité du plan Y0 du véhicule (le plan Y0 est le plan longitudinal du véhicule séparant le côté droit et le côté gauche du véhicule). Le point d'ancrage commun peut être une vis de fixation de la serrure ou une patte de renfort de la serrure. Les deux sous-parties (42, 44) ne sont pas nécessairement symétriques. Des points d'ancrage distincts peuvent être réalisés par différentes vis de fixation de la serrure sur le hayon.

Selon un mode de réalisation, le renfort mécanique (40) a une forme globalement en double « U», une forme en « U » du côté droit, et une forme un « U » du côté gauche du véhicule, comme l'illustre la figure 2 par exemple. Si le renfort mécanique (40) comporte plusieurs sous-parties, alors chaque sous-partie a une forme globalement en « U ». Cette configuration en plusieurs sous-parties permet de réaliser à partir de moules plus petits et de faciliter le stockage et les manipulations lors de l'assemblage.

Selon un autre mode de réalisation, illustré sur la figure 5, chaque zone en « U » du renfort mécanique (40) est complétée par une forme globalement en « Y » horizontal. Ce complément de renfort en « Y » est un complément fonctionnel d'un point de vue mécanique. Il est localisé à l'intérieur de chaque « U », les branches du « Y » relient celles du « U », de préférence relient les extrémités des branches du « U ». Ces liaisons en diagonale, réalisées par les branches du « Y », permettent de retenir entre-elles les branche du « U » par un effet de triangulation, et ainsi d'éviter qu'elles ne s'écartent lorsque l'ouvrant se disloque. Si le renfort mécanique (40) est constitué de plusieurs sous-parties (42, 44), alors chaque sous-partie présente une forme globalement en « Y » combinée à une forme en « U » (voir figure 4).

Les branches du « U » et les branches du « Y » sont obtenues par moulage, de préférence en même temps : les branches du « U » et du « Y » forment une pièce unique. Mais selon un autre mode de réalisation, les branches du « Y » peuvent aussi être obtenues séparément des branches du « U ». Dans ce cas, les branches formant le « Y » sont rapportées sur le « U » par tous moyens de fixation, tels que collage, rivetage, soudure...

### Fixation du renfort mécanique (40)

Chaque renfort mécanique (40) est fixé à la structure interne (30) au moyen d'au moins une des techniques suivantes : collage, soudage (ultrason, par vibrations, laser, miroir...), bouterollage, surmoulage, vissage, rivetage, clipage, adhésivage...

### Exemples de réalisation

Selon un exemple particulier de réalisation, la structure interne (30) est réalisée en matière thermoplastique comportant du PP et 40% en masse de fibres de verre longues. Une fibre longue a généralement une longueur vierge (avant mise en œuvre) supérieure à 10mm. Un tel matériau a un module d'Young sensiblement égal à 5300MPa, et un coefficient d'allongement à la rupture de 3,5%, et une densité de 1,22kg/l.

Les fibres de renfort peuvent être des fibres de verre, de carbone, d'aramide, de kevlar, ...

Selon un autre exemple particulier de réalisation, la structure interne (30) est réalisée en matière plastique thermodurcissable de type SMC comportant 30% (en masse) de fibres de renfort longues. Un tel matériau a un module d'Young sensiblement égal à 11000MPa, et un coefficient d'allongement à la rupture de 1,5%, et une densité de 1,9kg/l.

Selon un exemple particulier de réalisation, la peau externe (20) est réalisée en matière thermoplastique comportant du PP et 30% en masse de talc. Un tel matériau a un module d'Young sensiblement égal à 3000MPa, et un coefficient d'allongement à la rupture de 17%, et une densité de 1,12kg/l.

Selon un exemple particulier de réalisation, le renfort mécanique (40) est réalisé en matière thermoplastique à base de polypropylène sans charge (ni fibre de verre, ni talc). Par exemple, le PP Compound 108 CSF10 de la société Sabic® a un module d'Young sensiblement égal à 1300MPa, et un coefficient d'allongement à la rupture de 500%, et une densité de 0,96Kg/l.

L'invention n'est pas limitée aux modes de réalisation présentés et d'autres modes de réalisation apparaîtront clairement à l'homme du métier. En outre, dans un mode de réalisation qui ne fait pas partie de l'invention, il est notamment possible que le renfort mécanique (40) soit en acier.

On a présenté un sous-ensemble (10) constituant un ouvrant de type hayon. Mais l'on ne sortirait pas du cadre de l'invention lorsque le sous-ensemble est un autre type d'ouvrant, ou toutes pièces structurelles ou semi-structurelles, soumises au même type de contraintes lors d'un choc à grande vitesse.

## Revendications

1. Sous-ensemble (10) de véhicule automobile comprenant une première pièce (20) en matière plastique formant une peau externe de carrosserie, et une seconde pièce (30) en matière plastique formant une structure interne sur laquelle ladite première pièce (20) est fixée, dans lequel la seconde pièce (30) comprend au moins un renfort mécanique (40), **caractérisé en ce que** le renfort mécanique (40) est un renfort mécanique (40) en matériau thermoplastique ayant un module d'Young inférieur à celui de la matière plastique de la seconde pièce (30), et un coefficient d'allongement à la rupture supérieur à celui de la matière plastique de la seconde pièce (30).

2. Sous-ensemble (10) selon la revendication 1, dans lequel la première pièce (20) est en matière thermoplastique, et la seconde pièce (30) est en matière plastique thermodurcissable.

3. Sous-ensemble (10) selon l'une des revendications précédentes, dans lequel le renfort mécanique (40) a les propriétés suivantes :
- un module d'Young compris entre 500MPa et 3000MPa, de préférence entre 800MPa et 2000MPa ;
- un coefficient d'allongement à la rupture supérieur à 20%, de préférence entre 20 et 80%, et encore de préférence supérieur à 80%.

4. Sous-ensemble (10) selon l'une des revendications précédentes, dans lequel le renfort mécanique (40) est en polypropylène (PP), ou en polyéthylène (PE).

5. Sous-ensemble (10) selon l'une des revendications précédentes, dans lequel le renfort mécanique (40) est disposé dans au moins une zone (50) de plus faible résistance mécanique.

6. Sous-ensemble (10) selon l'une des revendications précédentes, comportant un seul renfort mécanique (40) couvrant l'ensemble des zones (50) de plus faible résistance mécanique.

7. Sous-ensemble (10) selon la revendication 6, formant un hayon et dans lequel le renfort mécanique (40) comporte un élément formant une boucle (60), ledit élément étant fixé à la zone serrure, de façon à ce que la serrure vienne se positionner dans la boucle (60) lorsque le hayon est fermé.

8. Sous-ensemble (10) selon l'une des revendications précédentes, constituant un hayon, et dans lequel les zones (50) de plus faible résistance mécanique sont choisies parmi les zones suivantes : les deux coins inférieurs latéraux du hayon, une zone de connexion (50B) d'un montant latéral (70) avec la base du hayon, et deux zones perpendiculaires à la base du hayon (50C) et encadrant la zone serrure.

9. Sous-ensemble (10) selon l'une des revendications précédentes, dans lequel le renfort mécanique (40) est fixé à la seconde pièce (30) au moyen d'au moins une des techniques suivantes : collage, soudage (ultrason, laser, miroir...), bouterollage, surmoulage, vissage, rivetage, clipage, adhésivage.

10. Sous-ensemble (10) selon la revendication 1, dans lequel la première pièce (20) est en matière thermoplastique comportant du polypropylène et 30% en masse de talc.

11. Sous-ensemble (10) selon la revendication 1, dans lequel la seconde pièce (30) est en matière thermoplastique comportant du polypropylène et 40% en masse de fibres de verre longues.

12. Sous-ensemble (10) selon la revendication 1, dans lequel la seconde pièce (30) est en matière plastique thermodurcissable de type SMC comportant 30% en masse de fibres de renfort longue.

13. Sous-ensemble (10) selon l'une des revendications précédentes, dans lequel le renfort mécanique (40) comporte au moins deux sous-parties.

14. Sous-ensemble (10) selon la revendication 13, dans lequel chaque sous-partie comporte un élément formant une boucle (60), ledit élément étant fixé à la zone serrure, de façon à ce que la serrure vienne se positionner dans la boucle (60) lorsque le hayon est fermé.

15. Sous-ensemble (10) selon l'une des revendications précédentes, dans lequel le renfort mécanique (40) a une forme globalement en double « U».

16. Sous-ensemble (10) selon la revendication 15, dans lequel chaque zone en « U » du renfort mécanique (40) est complétée par une forme globalement en « Y» horizontal.

## Patentansprüche

1. Unterbaugruppe (10) für ein Kraftfahrzeug, die ein erstes Teil (20) aus Kunststoffmaterial, das eine Außenhaut der Karosserie bildet, und ein zweites Teil (30) aus Kunststoffmaterial, das eine innere Struktur bildet, an der das erste Teil (20) befestigt ist, aufweist, wobei das zweite Teil (30) mindestens eine mechanische Verstärkung (40) aufweist **dadurch gekennzeichnet, dass** die mechanische Verstärkung (40) eine mechanische Verstärkung (40) ist, die aus einem thermoplastischen Material hergestellt ist, das einen niedrigeren Youngschen Elastizitätsmodul als das Kunststoffmaterial des zweiten Teils (30) und einen höheren Bruchdehnungskoeffizienten als das Kunststoffmaterial des zweiten Teils (30) aufweist.

2. Unterbaugruppe (10) nach Anspruch 1, wobei das erste Teil (20) aus einem thermoplastischen Material und das zweite Teil (30) aus einem wärmehärtenden Kunststoffmaterial hergestellt ist.

3. Unterbaugruppe (10) nach einem der vorhergehenden Ansprüche, wobei die mechanische Verstärkung (40) die folgenden Eigenschaften aufweist:
- einen Youngschen Elastizitätsmodul zwischen 500MPa und 3000MPa, vorzugsweise zwischen 800MPa und 2000MPa;
- einen Bruchdehnungskoeffizienten von mehr als 20 %, vorzugsweise zwischen 20 und 80 % und noch mehr bevorzugt von mehr als 80 %.

4. Unterbaugruppe (10) nach einem der vorhergehenden Ansprüche, wobei die mechanische Verstärkung (40) aus Polypropylen (PP) oder Polyethylen (PE) hergestellt ist.

5. Unterbaugruppe (10) nach einem der vorhergehenden Ansprüche, wobei die mechanische Verstärkung (40) in mindestens einer Zone (50) mit geringerer mechanischer Festigkeit angeordnet ist.

6. Unterbaugruppe (10) nach einem der vorhergehenden Ansprüche, mit einer einzigen mechanischen Verstärkung (40), die alle Zonen (50) mit geringerer mechanischer Festigkeit abdeckt.

7. Unterbaugruppe (10) nach Anspruch 6, die eine Heckklappe bildet und bei der die mechanische Verstärkung (40) ein Schlaufenelement (60) aufweist, wobei das Element an dem Schlossbereich angebracht ist, so dass das Schloss in der Schlaufe (60) positioniert ist, wenn die Heckklappe geschlossen ist.

8. Unterbaugruppe (10) nach einem der vorhergehenden Ansprüche, die eine Heckklappe bildet, und bei der die Zonen (50) mit geringerer mechanischer Festigkeit aus den folgenden Zonen ausgewählt sind: den beiden unteren seitlichen Ecken der Heckklappe, einer Verbindungszone (50B) eines seitlichen Pfostens (70) mit dem Boden der Heckklappe und zwei Zonen, die senkrecht zum Boden der Heckklappe (50C) verlaufen und den Schlossbereich einrahmen.

9. Unterbaugruppe (10) nach einem der vorhergehenden Ansprüche, bei der die mechanische Verstärkung (40) an dem zweiten Teil (30) mittels mindestens einer der folgenden Techniken befestigt ist: Kleben, Schweißen (Ultraschall, Laser, Spiegel, etc.), Kleben, Umspritzen, Schrauben, Nieten, Clippen, Kleben.

10. Unterbaugruppe (10) nach Anspruch 1, wobei das erste Teil (20) aus einem thermoplastischen Material hergestellt ist, das Polypropylen und 30 Gew.-% Talkum aufweist.

11. Unterbaugruppe (10) nach Anspruch 1, wobei das zweite Teil (30) aus einem thermoplastischen Material hergestellt ist, das Polypropylen und 40 Gew.-% Langglasfasern aufweist.

12. Unterbaugruppe (10) nach Anspruch 1, wobei das zweite Teil (30) aus einem wärmehärtenden Kunststoffmaterial des SMC-Typs hergestellt ist, das 30 Gew.-% lange Verstärkungsfasern aufweist.

13. Unterbaugruppe (10) nach einem der vorhergehenden Ansprüche, wobei die mechanische Verstärkung (40) mindestens zwei Unterteile aufweist.

14. Unterbaugruppe (10) nach Anspruch 13, wobei jedes Unterteil ein Element aufweist, das eine Schlaufe (60) bildet, wobei das Element an dem Schlossbereich befestigt ist, so dass das Schloss in der Schlaufe (60) positioniert wird, wenn die Heckklappe geschlossen ist.

15. Unterbaugruppe (10) nach einem der vorhergehenden Ansprüche, wobei die mechanische Verstärkung (40) eine allgemein doppelte "U"-Form aufweist.

16. Unterbaugruppe (10) nach Anspruch 15, wobei jeder "U"-förmige Bereich der mechanischen Verstärkung (40) mit einer allgemein horizontalen "Y"-Form abgeschlossen ist.

## Claims

1. Motor vehicle subassembly (10) comprising a first part (20) made of plastic material forming an external body skin, and a second part (30) made of plastic material forming an internal structure to which said first part (20) is attached, wherein the second part (30) comprises at least one mechanical reinforcement (40) **characterised in that** the mechanical reinforcement (40) is a mechanical reinforcement (40) of thermoplastic material having a lower Young's modulus than the plastic material of the second part (30), and a higher coefficient of elongation at break than the plastic material of the second part (30).

2. Sub-assembly (10) according to claim 1, wherein the first part (20) is of thermoplastic material, and the second part (30) is of thermosetting plastic material.

3. Sub-assembly (10) according to any of the preceding claims, wherein the mechanical reinforcement (40) has the following properties:
- a Young's modulus of between 500MPa and 3000MPa, preferably between 800MPa and 2000MPa;
- a coefficient of elongation at break greater than 20%, preferably between 20 and 80%, and even more preferably greater than 80%.

4. Sub-assembly (10) according to any of the preceding claims, wherein the mechanical reinforcement (40) is made of polypropylene (PP), or polyethylene (PE).

5. Sub-assembly (10) according to any of the preceding claims, wherein the mechanical reinforcement (40) is disposed in at least one area (50) of lower mechanical strength.

6. Sub-assembly (10) according to one of the preceding claims, comprising a single mechanical reinforcement (40) covering all zones (50) of lower mechanical strength.

7. Sub-assembly (10) according to claim 6, forming a tailgate and in which the mechanical reinforcement (40) comprises an element forming a loop (60), said element being attached to the lock area, so that the lock comes to be positioned in the loop (60) when the tailgate is closed.

8. Sub-assembly (10) according to one of the preceding claims, constituting a tailgate, and in which the areas (50) of lower mechanical strength are selected from the following areas: the two lower side corners of the tailgate, a connection area (50B) of a side pillar (70) with the base of the tailgate, and two areas perpendicular to the base of the tailgate (50C) and framing the lock area.

9. Sub-assembly (10) according to one of the preceding claims, wherein the mechanical reinforcement (40) is attached to the second part (30) by means of at least one of the following techniques: gluing, welding (ultrasound, laser, mirror...), bonding, overmoulding, screwing, riveting, clipping, adhesive bonding.

10. Sub-assembly (10) according to claim 1, wherein the first part (20) is of thermoplastic material comprising polypropylene and 30% by weight of talc.

11. Sub-assembly (10) of claim 1, wherein the second part (30) is of thermoplastic material comprising polypropylene and 40% by weight long glass fibres.

12. Sub-assembly (10) according to claim 1, wherein the second part (30) is of SMC type thermosetting plastics material comprising 30% by mass of long reinforcing fibres.

13. Sub-assembly (10) according to any of the preceding claims, wherein the mechanical reinforcement (40) comprises at least two sub-parts.

14. Sub-assembly (10) according to claim 13, wherein each sub-part comprises a loop member (60), said member being attached to the lock area, so that the lock is positioned in the loop (60) when the tailgate is closed.

15. Sub-assembly (10) according to any of the preceding claims, wherein the mechanical reinforcement (40) is generally double "U" shaped.

16. Sub-assembly (10) according to claim 15, wherein each "U" shaped area of the mechanical reinforcement (40) is completed by a generally horizontal "Y" shape.
